# EUROPÄISCHE PATENTSCHRIFT

(11) **EP 4 244 171 B1**
(45) Veröffentlichungstag und Bekanntmachung des Hinweises auf die Patenterteilung: **25.09.2024**
(21) Anmeldenummer: 21802354.7
(22) Anmeldetag: 03.11.2021
(51) Int. Cl.: B66B 21/02, B66B 21/12, B66B 25/00

(54) **STEUEREINRICHTUNG FÜR EINE PERSONENTRANSPORTANLAGE**
CONTROL DEVICE FOR A PASSENGER TRANSPORT SYSTEM
DISPOSITIF DE COMMANDE POUR UNE INSTALLATION DE TRANSPORT DES PERSONNES

(30) Priorität: 16.11.2020 EP 20207875
(43) Veröffentlichungstag der Anmeldung: 20.09.2023
(73) Patentinhaber: INVENTIO AG, 6052 Hergiswil (CH)
(72) Erfinder: PRENNER, Alexander, 7033 Pöttsching (AT)
(74) Vertreter: Inventio AG
(86) Internationale Anmeldenummer: PCT/EP2021/080470
(87) Internationale Veröffentlichungsnummer: WO 2022/101066

(56) Entgegenhaltungen:
- WO-A1-02/057174
- WO-A1-98/18711
- US-A1- 2002 189 905

## Beschreibung

Die Erfindung betrifft eine Steuereinrichtung, eine als Fahrtreppe oder Fahrsteig ausgestaltete Personentransportanlage mit einer solchen Steuereinrichtung und ein Verfahren zur Steuerung des Antriebs der zwischen einem Lastbetrieb und einem Leerbetrieb umschaltbaren Personentransportanlage. Dabei umfasst die Personentransportanlage einen Netzspannungsanschluss, der eine dreiphasige Netzspannung liefert, einen elektrischen Antriebsmotor, insbesondere in Form eines dreiphasigen Induktionsmotors oder Synchronmotors, und einen Frequenzumrichter.

Eine typische Personentransportanlage zur Personenförderung in Form einer Fahrtreppe oder eines Fahrsteigs umfasst eine Vielzahl dicht benachbarter Trittplatten, die zu einem endlosen Transportband miteinander verbunden, mit Hilfe des Antriebsmotors in gewünschter Förderrichtung bewegt werden.

Um den Energieverbrauch und die Abnutzung derartiger Personentransportanlagen zu reduzieren, ist man dazu übergegangen, solche Personentransportanlagen nur bei Beförderungsbedarf in Förderbewegung zu versetzen und sie ansonsten zum Stillstand zu bringen. Alternativ oder in Ergänzung dazu kann die Personentransportanlage bei fehlendem Beförderungsbedarf auch in eine sogenannte Schleichfahrt versetzt werden. Hierbei wird die Geschwindigkeit des Transportbandes massiv reduziert, so dass einerseits Energie gespart werden kann und andererseits herannahenden Benutzern die Betriebsbereitschaft sowie die vorgesehene Förderrichtung der Personentransportanlage angezeigt wird.

Zur Erfassung eines Beförderungsbedarfs kann ein Beförderungsbedarf-Signalgeber vorgesehen sein, beispielsweise in Form einer in Förderrichtung vor der Personentransportanlage angeordneten Trittmatte, einer Lichtschranke, eines Radarsensors und dergleichen mehr. Liegt Beförderungsbedarf vor, beispielsweise weil ein Fahrgast vom Radarsensor erfasst worden ist, wird die Personentransportanlage für eine vorbestimmte Zeitdauer in Förderbewegung versetzt und wieder abgeschaltet, wenn innerhalb einer vorbestimmten Zeitdauer kein weiterer Beförderungsbedarf festgestellt worden ist.

Aus der WO 98/18711 A1 ist es bekannt, zur Vermeidung von Spitzenbelastungen während häufigen Ein- und Ausschaltens der Personentransportanlage den Antriebsmotor nicht abrupt ein- und auszuschalten, sondern bei Umschaltvorgängen die Drehzahl des Antriebsmotors rampenförmig ansteigen beziehungsweise abfallen zu lassen. Für derartige Personentransportanlagen werden vorwiegend Induktionsmotoren verwendet. Da die Drehzahl eines Induktionsmotors von der Frequenz der ihn speisenden Wechselspannung abhängt, was bei direkter Speisung aus einem Wechselspannungsnetz mit konstanter Netzfrequenz konstante Drehzahl des Induktionsmotors bedeutet, wird ein steuerbarer Frequenzumrichter eingesetzt, mit welchem die ihm zugeführte Netzfrequenz in steuerbarer Weise in eine von der Netzfrequenz verschiedene Ausgangsfrequenz umgesetzt werden kann.

Die Kosten für einen Frequenzumrichter, welcher den Antriebsmotor einer Fahrtreppe oder eines Fahrsteigs auch bei Lastbetrieb speist, sind hoch, da die Kosten des Frequenzumrichters mit der Ausgangsleistung, welche der Frequenzumrichter liefern können muss, enorm ansteigen.

Um die Anschaffungs- und Betriebskosten niedriger zu halten, sieht die WO 98/18711 A1 vor, dass die Personentransportanlage nur im Lastbetrieb mit voller Fördergeschwindigkeit angetrieben wird. In einem Stand-By-Betrieb oder Leerbetrieb, während dem kein Beförderungsbedarf besteht, soll die Personentransportanlage nur mit einer reduzierten Leerbetriebsgeschwindigkeit betrieben werden. Der Antriebsmotor wird hierbei nur während des Leerbetriebs und der Umschaltvorgänge aus dem Frequenzumrichter gespeist, während des Lastbetriebs jedoch direkt aus der Netzspannungsquelle. Dies schafft die Möglichkeit, den Frequenzumrichter hinsichtlich seiner Maximalleistung etwas niedriger auszulegen, was zu einer beträchtlichen Kosteneinsparung gegenüber einem Frequenzumrichter führt, dessen Maximalleistung dem Lastbetrieb der Personentransportanlage angepasst ist. Die aus der WO 98/18711 A1 bekannte Personentransportanlage geht dann, wenn nach Durchführung eines Förderauftrags kein weiterer Beförderungsbedarf gemeldet wird, zunächst in den Leerbetrieb über und wird in den Stillstand erst dann geschaltet, wenn für eine vorbestimmte Zeitdauer nach dem Übergang in den Leerbetrieb kein erneuter Beförderungsbedarf gemeldet wird. Allerdings ist auch eine solche elektrische Steuereinrichtung immer noch recht teuer und weist zudem im Leerbetrieb einen sehr schlechten Wirkungsgrad auf, so dass hierbei viel elektrische Energie ohne Nutzen verschwendet wird.

Demgegenüber ist es insbesondere die Aufgabe der Erfindung, eine elektrische Steuereinrichtung vorzuschlagen, welche noch kostengünstiger ist und insbesondere im Leerbetrieb energieeffizienter arbeitet.

Diese Aufgabe wird durch eine elektrische Steuereinrichtung gelöst, die zur Steuerung des Antriebs einer zwischen einem Lastbetrieb und einem Leerbetrieb umschaltbaren Personentransportanlage dient. Die Personentransportanlage ist als Fahrtreppe oder Fahrsteig ausgebildet und weist einen dreiphasigen Antriebsmotor auf. Die elektrische Steuereinrichtung umfasst zumindest:
- einen dreiphasigen Netzspannungsanschluss, welcher der Zuführung einer dreiphasigen Netzspannung dient;
- einen mindestens hinsichtlich der Frequenz seiner dreiphasigen Ausgangsspannung steuerbaren Frequenzumrichter;
- eine steuerbare Umschalteinrichtung die zwischen einem Lastbetriebsschaltzustand und einem Leerbetriebsschaltzustand umschaltbar ist, wobei im Lastbetriebsschaltzustand die drei Phasen des Antriebsmotors mit den drei Phasen des Netzspannungsanschlusses gekoppelt sind, und im Leerbetriebsschaltzustand die drei Phasen des Antriebsmotors mit den drei Phasen des Frequenzumrichters gekoppelt sind, so dass der Antriebsmotor im Lastbetrieb mit einer dreiphasigen Netzspannung und im Leerbetrieb mit der dreiphasigen Ausgangsspannung des Frequenzumrichters gespeist wird.

Erfindungsgemäss erfolgt die Speisung des Frequenzumrichters über mindestens eine Phase des dreiphasigen Netzspannungsanschlusses und einen Nullleiter des Netzspannungsanschlusses. Diese Ausgestaltung stellt eine Abkehr von der gängigen Lehrmeinung dar, dass der Frequenzumrichter dieselbe maximale dreiphasige Ausgangsspannung haben muss, wie der dreiphasige Netzspannungsanschluss. Untersuchungen haben ergeben, dass im Leerbetriebsschaltzustand die Ausgangsleistung beziehungsweise Ausgangsspannung des Frequenzumrichters ausreicht, um in ausreichend kurzer Zeit das noch unbesetzte Transportband auf eine gewünschte Nenngeschwindigkeit zu bringen. Wenn diese erreicht ist, kann mittels der Umschalteinrichtung vom Leerbetriebsschaltzustand in den Lastbetriebsschaltzustand gewechselt werden, um dem Antriebsmotor ausreichend Energie zur Beförderung von Benutzern ohne Geschwindigkeitsverlust zuzuführen. Die Umschaltung ist auch dann noch möglich, wenn bereits eine geringe Anzahl von Benutzern das Transportband erreicht und betreten haben, da die Massenträgheit des bewegten Transportbandes und der kinematischen Übertragungskette zwischen dem Antriebsmotor und dem Transportband so gross ist, dass ein Abbremsen des Transportbandes während des Umschaltvorganges nicht spürbar ist. Der grosse Vorteil in dieser Abkehr liegt einerseits darin, dass die Bauteile des Frequenzumrichters aufgrund der geringeren Speisespannung zwischen einer Phase und dem Nullleiter noch wesentlich kleiner dimensioniert werden können, als bei einer Speisespannung, die zwischen den drei Phasen des Netzspannungsanschlusses vorhanden ist. Dadurch können die Herstellkosten der Steuereinrichtung wesentlich tiefer gehalten werden. Als weiterer Vorteil konnte festgestellt werden, dass durch die kleinere Dimensionierung des Frequenzumrichters dessen Bauteile besser ausgelastet sind und hierdurch dessen Wirkungsgrad verglichen zur herkömmlichen Ausgestaltung mit einer Phasen- / Phasen- Speisespannung deutlich höher ist. Dadurch kann bei häufigem Betrieb im Leerbetriebsschaltzustand erheblich elektrische Energie eingespart werden.

Mit anderen Worten wird zur Speisung des Frequenzumrichters eine Frequenzumrichter-Speisespannung angelegt, welche um den Faktor 1 / √3 beziehungsweise um den Faktor 1 / 1.73 kleiner ist als die dreiphasige Netzspannung.

Bei einer dreiphasigen Netzspannung von dreimal 400 Volt beträgt die Frequenzumrichter-Speisespannung aufgrund des Phasen- / Nulleiteranschlusses somit 230Volt und dementsprechend kann die dreiphasige Ausgangsspannung des Frequenzumrichters in einem Bereich von dreimal 0 bis 230Volt variiert werden. Bei einer dreiphasigen Netzspannung von dreimal 380 Volt beträgt die Frequenzumrichter-Speisespannung 220Volt und dementsprechend kann die dreiphasige Ausgangsspannung des Frequenzumrichters in einem Bereich von dreimal 0 bis 220Volt variiert werden.

In einer Ausgestaltung der Erfindung kann der Frequenzumrichter ein Gleichrichtermodul mit einer Dioden- Brückenschaltung aufweisen, welches auf seiner Eingangsseite mit einer Phase des dreiphasigen Netzspannungsanschlusses und mit dem Nullleiter verbunden ist. Gegebenenfalls kann im Gleichspannungskreis des Frequenzumrichters die von der Gleichrichterbrücke erzeugte Gleichspannung mittels eines Kondensators geglättet werden.

In einer weiteren Ausgestaltung der Erfindung kann der Frequenzumrichter ein Gleichrichtermodul mit einer sich von der Brückenschaltung unterscheidenden Diodenanordnung aufweisen. Dieses Gleichrichtermodul ist auf seiner Eingangsseite mit jeder Phase des dreiphasigen Netzspannungsanschlusses verbunden, wobei die drei Phasen jeweils über eine Diode gleicher Sperrrichtung zusammengeführt werden und den Pluspol des Gleichspannungskreises des Frequenzumrichters bilden. Der Nullleiter bildet hierbei den Minuspol des Gleichspannungskreises.

In einer weiteren Ausgestaltung der Erfindung kann der Frequenzumrichter ein Gleichrichtermodul mit einer Diodenanordnung aufweisen, die hinsichtlich der vorangehend beschriebenen Ausgestaltung in entgegengesetzter Richtung den Stromdurchlass sperrt. Dieses Gleichrichtermodul ist auf seiner Eingangsseite ebenfalls mit jeder Phase des dreiphasigen Netzspannungsanschlusses verbunden, wobei die drei Phasen jeweils über eine Diode gleicher Sperrrichtung zusammengeführt werden und den Minuspol des Gleichspannungskreises des Frequenzumrichters bilden. Der Nullleiter bildet hierbei den Pluspol des Gleichspannungskreises.

In einer weiteren Ausgestaltung der elektrischen Steuereinrichtung kann die steuerbare Umschalteinrichtung von einer Steuerung der Personentransportanlage ansteuerbar sein. Mit anderen Worten übernimmt sie Steuerung der Personentransportanlage die gesamte Schaltlogik. Hierzu verwendet sie vorzugsweise Status-Informationen, die vom Frequenzumrichter und gegebenenfalls auch von der steuerbaren Umschalteinrichtung an die Steuerung zurückgemeldet werden. Solche Statusinformationen können beispielsweise die momentane dreiphasige Ausgangsspannung des Frequenzumrichters und/oder der momentane Schaltzustand der steuerbaren Umschalteinrichtung sein. Selbstverständlich kann der Umschaltvorgang der steuerbaren Umschalteinrichtung vom Leerbetriebsschaltzustand in den Lastbetriebsschaltzustand auch zeitbasiert erfolgen, indem die Steuerung nach dem Ansteuern des Frequenzumrichters zeitverzögert den Umschaltvorgang in der steuerbaren Umschalteinrichtung auslöst. Alternativ dazu kann die steuerbare Umschalteinrichtung auch von einem Steuerungsmodul des Frequenzumrichters direkt angesteuert werden.

In einer weiteren Ausgestaltung kann die elektrischen Steuereinrichtung ein Phasensynchronisationsmodul aufweisen. Dieses Phasensynchronisationsmodul synchronisiert die Umrichter-Frequenz der dreiphasigen Ausgangsspannung des Frequenzumrichters mit der Netzfrequenz des dreiphasigen Netzspannungsanschlusses, indem die Nulldurchgänge der Netzfrequenz erfasst werden und die IGBT des Frequenzumrichters entsprechend angesteuert werden, so dass die Nulldurchgänge der drei Phasen sowie deren Phasenlage mit den entsprechenden Phasen des Netzspannungsanschlusses übereinstimmen. Das Phasensynchronisationsmodul löst dann den Umschaltvorgang der steuerbaren Umschaltvorrichtung in Abhängigkeit der synchronisierten Netzfrequenz und Umrichter-Frequenz aus. Selbstverständlich kann die gesamte Logik des Phasensynchronisationsmoduls auch in der Steuerung der Personentransportanlage implementiert sein.

Eine Personentransportanlage, die als Fahrtreppe oder Fahrsteig ausgebildet ist und zumindest eine Steuerung, einen dreiphasigen Antriebsmotor und eine elektrische Steuereinrichtung der vorgenannten Art aufweist, erfordert signalübertragende Verbindungen zwischen den vorangehend beschriebenen Elementen. So kann die Steuerung über eine kabelgebundene oder kabellose Signalverbindung mit der elektrischen Steuereinrichtung beziehungsweise mit deren steuerbarem Frequenzumrichter und deren steuerbaren Umschalteinrichtung verbunden sein.

Um einen Beförderungsbedarf erfassen zu können, kann die Personentransportanlage mindestens einen BeförderungsbedarfSignalgeber aufweisen. Mit anderen Worten weist die Personentransportanlage Sensoren auf, die ein Herannahen oder einen Zutritt eines Benutzers erfassen können. Ein erfasster Benutzer wird als Beförderungsbedarf interpretiert und als Sensorsignal an die Steuerung übertragen. Die Steuerung steuert hernach abhängig vom Sensorsignal zumindest den steuerbaren Frequenzumrichter und je nach Auslegung der elektrischen Steuereinrichtung direkt oder indirekt die steuerbare Umschalteinrichtung an.

Konkret kann dies bedeuten, dass die Steuerung die steuerbare Umschalteinrichtung derart ansteuert, dass dem dreiphasigen Antriebsmotor des Antriebs bei Lastbetrieb die dreiphasige Netzspannung von dreimal 400 Volt zugeführt wird und bei Leerbetrieb die dreiphasige Ausgangsspannung des Frequenzumrichters von dreimal 0 bis 230Volt zugeführt wird. Bei einer dreiphasigen Netzspannung von 380 Volt wird sinngemäss dem dreiphasigen Antriebsmotor des Antriebs bei Lastbetrieb die dreiphasige Netzspannung von dreimal 380 Volt zugeführt und bei Leerbetrieb die dreiphasige Ausgangsspannung des Frequenzumrichters von dreimal 0 bis 220Volt zugeführt.

Wie bereits weiter oben erwähnt, kann die Personentransportanlage mindestens einen BeförderungsbedarfSignalgeber aufweisen, durch welchen ein Beförderungsbedarf und damit ein bevorstehender Lastbetrieb erfasst werden kann. Der Beförderungsbedarf-Signalgeber überträgt einen erfassten Beförderungsbedarf als Sensorsignal an die Steuerung, wobei die Steuerung abhängig von diesem Sensorsignal den steuerbaren Frequenzumrichter und die steuerbare Umschalteinrichtung ansteuert.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Die Zeichnungen sind lediglich schematisch und nicht massstabsgetreu. Dabei zeigen:
- Figur 1: eine Personentransportanlage, die als Fahrtreppe oder Fahrsteig ausgebildet ist, und zumindest eine Steuerung, einen dreiphasigen Antriebsmotor und eine elektrische Steuereinrichtung aufweist;
- Figur 2: ein Diagramm zur Darstellung der verschiedenen, möglichen Betriebszustände;
- Figur 3A: ein Gleichrichtermodul des Frequenzumrichters in einer ersten Ausführung;
- Figur 3B: ein Gleichrichtermodul des Frequenzumrichters in einer zweiten Ausführung; und
- Figur 3C: ein Gleichrichtermodul des Frequenzumrichters in einer dritten Ausführung.

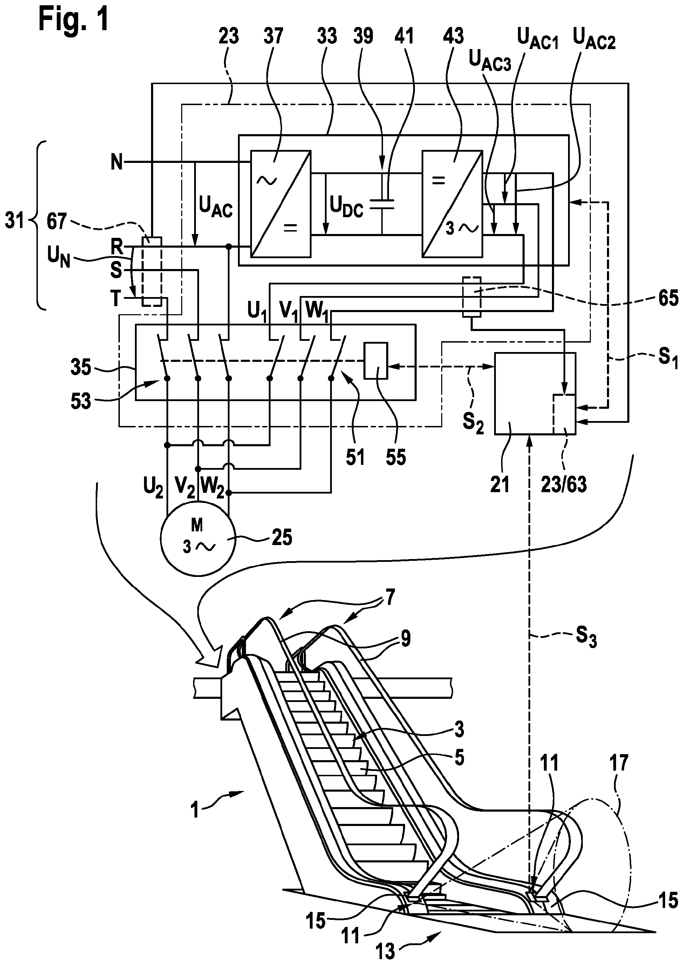

Figur 1 zeigt eine Personentransportanlage 1, die als Fahrtreppe ausgebildet ist. Die für einen Benutzer sichtbaren Komponenten der Personentransportanlage 1 sind ein umlaufend bewegbares Transportband 3 mit Stufen 5. Zur linken und rechten Seite des Transportbandes 3 erstrecken sich Balustraden 7 mit umlaufend bewegbaren Handläufen 9. Die Rückführung der Handläufe 9 und des Transportbandes 3 erfolgt innerhalb der Personentransportanlage 1 und daher vor den Benutzern verborgen. Ebenfalls verborgen sind Beförderungsbedarf-Signalgeber 11, die den Zutrittsbereich 13 der Personentransportanlage 1 überwachen. Im vorliegenden Ausführungsbeispiel sind die Beförderungsbedarf-Signalgeber 11 Radarsensoren, die hinter Handlaufeinlaufkappen 15 versteckt angeordnet sind. Mittels strichpunktierter Linie ist deren Erfassungsbereich 17 angedeutet.

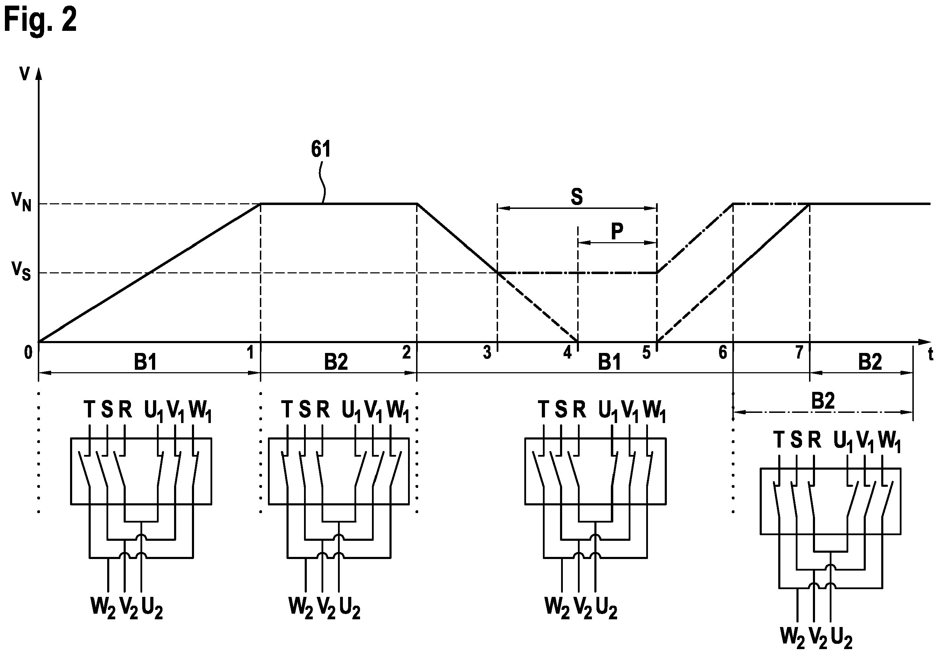

Wie durch den weitgeschwungenen Pfeil angedeutet, ist innerhalb der Personentransportanlage 1 zudem eine Steuerung 21, ein dreiphasiger Antriebsmotor 25 und eine elektrische Steuereinrichtung 23 untergebracht. Der dreiphasige Antriebsmotor 25 wirkt über ein nicht dargestelltes Getriebe auf das Transportband 3 und die Handläufe 9 ein und kann diese antreiben. Die Steuerung 21 steuert und regelt den Fahrbetrieb der Personentransportanlage 1, wie er beispielhaft in der weiter unten beschriebenen Figur 2 dargestellt ist.

Wie in der Figur 1 gezeigt, umfasst die elektrische Steuereinrichtung 23 zumindest einen dreiphasigen Netzspannungsanschluss 31, einen Frequenzumrichter 33 und eine steuerbare Umschalteinrichtung 35.

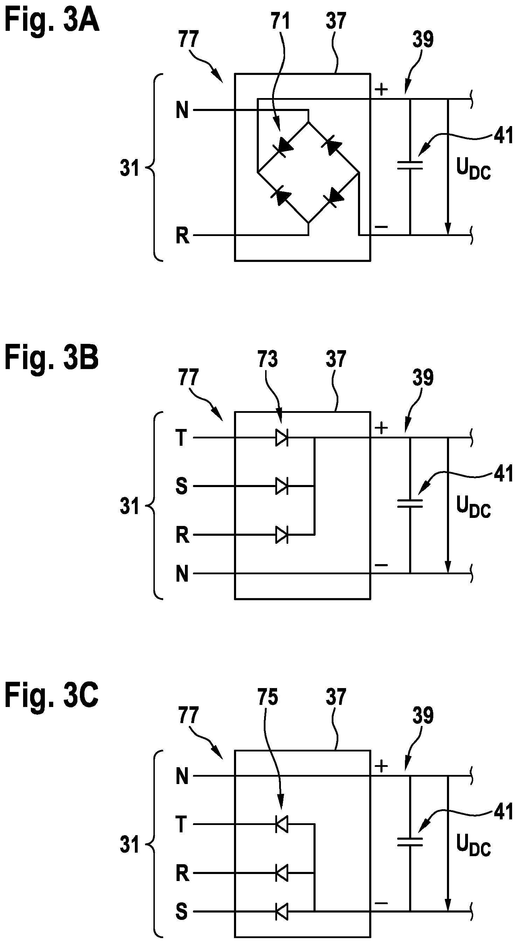

Der dreiphasigen Netzspannungsanschluss 31 dient der Zuführung einer dreiphasigen Netzspannung U_{N} über die drei Phasen R, S, T und weist zudem auch einen Nullleiter N auf. Im vorliegenden Ausführungsbeispiel sind der Nullleiter N und die Phase R des Netzspannungsanschlusses 31 mit einem Gleichrichtermodul 37 des Frequenzumrichters 33 verbunden und liefern eine Versorgungsspannung U_{AC}. Verschiedene Ausführungen, auch solche, bei denen alle drei Phasen R, S, T und der Nullleiter N des Netzspannungsanschlusses mit dem Gleichrichtermodul 37 verbunden sind, werden weiter unten mit Bezug auf die Figuren 3A bis 3C beschrieben.

Der Frequenzumrichter 33 weist zudem einen Gleichspannungskreis 39 auf, der durch das Gleichrichtermodul 37 gespeist wird. Je nach Ausgestaltung des Gleichrichtermoduls 37 kann es dienlich sein, wenn die Gleichspannung U_{DC} im Gleichspannungskreis 39 mittels eines Kondensators 41 geglättet wird. Der Gleichspannungskreis 39 wiederum speist ein Umrichtermodul 43 des Frequenzumrichters 33. Das Umrichtermodul 43 ist hinsichtlich seiner dreiphasigen Ausgangsspannung U_{AC1}, U_{AC2}, U_{AC3} steuerbar. Der Frequenzumrichter 33 kann zu diesem Zweck durch die Steuerung 21 angesteuert werden, wie dies durch den mit unterbrochener Linie dargestellten Doppelpfeil S₁ angedeutet ist. Die Ausgangsspannungen U_{AC1}, U_{AC2}, U_{AC3} werden über drei Phasen U₁, V₁, W₁ vom Umrichtermodul 43 ausgegeben.

Die drei Phasen U₁, V₁, W₁ sind mit einer ersten Schalteranordnung 51 der steuerbaren Umschalteinrichtung 35 verbunden. Die drei Phasen R, S, T des Netzspannungsanschlusses 31 sind zudem mit einer zweiten Schalteranordnung 53 der steuerbaren Umschalteinrichtung 35 verbunden. Beide Schalteranordnungen 51, 53 werden durch einen Aktuator 55 der steuerbaren Umschalteinrichtung 35 geschaltet, wobei der Aktuator 55 wie durch den mit unterbrochener Linie dargestellten Doppelpfeil S₂, ebenfalls von der Steuerung 21 angesteuert wird. Doppelpfeile S₁, S₂ werden hier deshalb verwendet, weil ein bidirektionaler Signalfluss vorgesehen ist. Einerseits werden Steuerbefehle von der Steuerung 21 an den Frequenzumrichter 33 beziehungsweise an die steuerbare Umschalteinrichtung 35 übertragen und andererseits von diesen ihre aktuellen Zustände an die Steuerung 21 zurückgesendet.

Die steuerbare Umschalteinrichtung 35 hat die Aufgabe, zwischen einem Lastbetriebsschaltzustand B2 und einem Leerbetriebsschaltzustand B1 (siehe Figur 2) umzuschalten, wobei im Lastbetriebsschaltzustand B2 die drei Phasen U₂, V₂, W₂ des Antriebsmotors 25 mit den drei Phasen R, S, T des Netzspannungsanschlusses 31 gekoppelt sind, während die drei Phasen U₁, V₁, W₁ des Umrichtermoduls 43 von den drei Phasen U₂, V₂, W₂ des Antriebsmotors 25 entkoppelt sind. Im Leerbetriebsschaltzustand B1 sind die Kopplungen genau umgekehrt, dann sind die drei Phasen U₂, V₂, W₂ des Antriebsmotors 25 mit den drei Phasen U₁, V₁, W₁ des Umrichtermoduls 43 gekoppelt und die drei Phasen R, S, T des Netzspannungsanschlusses 31 von den drei Phasen U₂, V₂, W₂ des Antriebsmotors 25 entkoppelt. Mit anderen Worten wird der Antriebsmotor 25 im Lastbetrieb mit einer dreiphasigen Netzspannung U_{N} und im Leerbetrieb mit der dreiphasigen Ausgangsspannung U_{AC1}, U_{AC2}, U_{AC3} des Frequenzumrichters 33 gespeist wird.

Wie bereits beschrieben, weist die Personentransportanlage 1 in den Zutrittsbereichen 13 Beförderungsbedarf-Signalgeber 11 auf. Durch diese kann ein Benutzer erfasst werden, wenn er auf den Zutrittsbereich 13 der Personentransportanlage 1 zuschreitet, um diese zu betreten. Durch den Beförderungsbedarf-Signalgeber 11 wird somit ein Beförderungsbedarf und damit ein bevorstehender Lastbetrieb erfasst. Ein erfasster Beförderungsbedarf wird als Sensorsignal S₃ an die Steuerung 21 übertragen, wobei die Steuerung 21 abhängig von diesem Sensorsignal S₃, den steuerbaren Frequenzumrichter 33 und die steuerbare Umschalteinrichtung 35 ansteuert.

Um das Zusammenwirken des Netzspannungsanschlusses 31, des Frequenzumrichters 33 und der steuerbaren Umschaltvorrichtung 35 aufzuzeigen, ist in der Figur 2 ein beispielhafter Geschwindigkeitsverlauf 61 während verschiedener möglicher Betriebszustände dargestellt. Auf der Ordinate ist die Geschwindigkeit V des Transportbandes 3 und auf der Abszisse die Zeit t aufgetragen. Nachfolgend werden die verschiedenen Betriebszustände unter Zuhilfenahme der Figuren 1 und 2 beschrieben.

Zum Zeitpunkt 0 wird beispielsweise vom Beförderungsbedarf-Signalgeber 11 ein herannahender Benutzer erfasst und als Beförderungsbedarf an die Steuerung 21 gemeldet. Diese regelt die dreiphasige Ausgangsspannung U_{AC1}, U_{AC2} U_{AC3} des Frequenzumrichters 33 hoch, wobei die steuerbare Umschalteinrichtung 35 auf den Leerbetriebsschaltzustand B1 geschaltet ist. Mit anderen Worten wird dem Antriebsmotor die dreiphasige Ausgangsspannung U_{AC1}, U_{AC2} U_{AC3} des Frequenzumrichters 33 zugeführt, während der Antriebsmotor 25 vom dreiphasigen Netzspannungsanschluss 31 getrennt ist. Zwischen den Zeitpunkten 0 und 1 wird der Frequenzumrichter 33 hochgeregelt, so dass die Geschwindigkeitsverlauf 61 des Transportbandes 3 und der Handläufe 9, rampenförmig bis zur Nenngeschwindigkeit V_{N} zunimmt.

Zum Zeitpunkt 1, bei dem der Benutzer das Transportband 3 ungefähr erreicht hat, ist dieses auf Nenngeschwindigkeit Vrr. Nun kann die Steuerung 21 ein Umschaltsignal S₂ an die steuerbare Umschalteinrichtung 35 senden. Mit dem Umschalten wird der dreiphasige Antriebsmotor 25 vom Frequenzumrichter 33 abgekoppelt und mit den drei Phasen R, S, T des Netzspannungsanschlusses 31 verbunden. Die steuerbare Umschalteinrichtung 35 hat somit vom Leerbetriebsschaltzustand B1 in den Lastbetriebsschaltzustand B2 gewechselt, um dem dreiphasigen Antriebsmotor 25 ausreichend elektrische Energie zur Beförderung von Benutzern ohne Geschwindigkeitsverlust zuzuführen.

Zum Zeitpunkt 2 hat der Benutzer die Personentransporteinrichtung 1 verlassen. Dieser Zeitpunkt kann beispielsweise aus der Fahrzeit t und der Nenngeschwindigkeit V_{N} errechnet werden. Alternativ dazu kann natürlich auch das Signal des am anderen Zutrittsbereich 13 angeordneten Beförderungsbedarf-Signalgebers 11 herangezogen werden, welcher ein Verlassen des Benutzers registrieren und an die Steuerung 21 melden kann. Ab dem Zeitpunkt 2 kann die Geschwindigkeit V des Transportbandes 3 und der Handläufe 9 wieder reduziert werden, sofern kein neuer Benutzer herannaht. Zur Reduzierung der Geschwindigkeit V wird die steuerbare Umschalteinrichtung 35 im Zeitpunkt 2 vom Lastbetriebsschaltzustand B2 wieder in den Leerbetriebsschaltzustand B1 umgeschaltet, wobei vor dem Schaltvorgang vorzugsweise die Ausgangsspannungen U_{AC1}, U_{AC2}, U_{AC3} des Frequenzumrichters 33 zuerst hochgeregelt, und nach dem Schaltvorgang rampenförmig heruntergeregelt werden.

Hinsichtlich des weiteren Betriebes können zwei Möglichkeiten vorhanden sein:
In einer ersten Variante kann das Transportband 3 im Leerbetriebsschaltzustand B1 bis zum Stillstand P gebracht werden, welcher im vorliegenden Beispiel in Punkt 4 erreicht ist und bis Punkt 5 erhalten bleibt. Sobald vom Beförderungsbedarf-Signalgeber 11 wieder ein Beförderungsbedarf (hier in Zeitpunkt 5) gemeldet wird, erfolgt in analoger Weise wie bereits für die Zeitpunkte 0 bis 1 beschrieben, ein Hochfahren des Antriebsmotors 25 mittels des Frequenzumrichters 33 und bei Erreichen der Nenngeschwindigkeit V_{N} in Zeitpunkt 7, der Umschaltvorgang durch die steuerbare Umschalteinrichtung 35 vom Leerbetriebsschaltzustand B1 in den Lastbetriebsschaltzustand B2.

In einer zweiten Variante kann das Transportband 3 im Leerbetriebsschaltzustand B1 in eine sogenannte Schleichfahrt S versetzt werden, wobei die Schleichfahrtgeschwindigkeit Vs beispielsweise der Hälfte der Nenngeschwindigkeit V_{N} entspricht. Anschliessend wird die Schleichfahrtgeschwindigkeit Vs wie durch die strichpunktierte Linie dargestellt, konstant gehalten, bis zum Zeitpunkt 5 wieder ein Beförderungsbedarf registriert wird. Dann wird mittels des Frequenzumrichters 33 der Antriebsmotor 25 wieder hochgefahren, bis nach Erreichen der Nenngeschwindigkeit V_{N} in Zeitpunkt 6 der Umschaltvorgang durch die steuerbare Umschalteinrichtung 35 vom Leerbetriebsschaltzustand B1 in den Lastbetriebsschaltzustand B2 erfolgt. Wie aus dem Diagramm klar ersichtlich ist, erreicht das Transportband 11 in der zweiten Variante wesentlich früher die Nenngeschwindigkeit V_{N} und der Umschaltvorgang kann früher erfolgen.

Wenn beim Umschaltvorgang die Phasennulldurchgänge des Netzspannungsanschlusses 31 gegenüber den Phasennulldurchgängen der Ausgangsspannungen U_{AC1}, U_{AC2}, U_{AC3} des Frequenzumrichters 33 verschoben sind, kann dies zu unerwünschten Zusatzbelastungen für die mechanischen und elektrischen Komponenten der Personentransportanlage 1 führen. Um dies zu vermeiden, kann die elektrischen Steuereinrichtung 23 ein Phasensynchronisationsmodul 63 aufweisen. Dieses Phasensynchronisationsmodul 63 synchronisiert die Umrichter-Frequenz der dreiphasigen Ausgangsspannung U_{AC1}, U_{AC2}, U_{AC3} des Frequenzumrichters 33 mit der Netzfrequenz des dreiphasigen Netzspannungsanschlusses 31, indem die beispielsweise die Phasennulldurchgänge durch Sensoren 65, 67 erfasst werden und die nicht dargestellten IGBT des Umrichtermoduls 43 entsprechend angesteuert werden, so dass die Nulldurchgänge der drei Phasen U₁, V₁, W₁ sowie deren Phasenlage mit den entsprechenden Phasen R, S, T des Netzspannungsanschlusses 31 übereinstimmen. Das Phasensynchronisationsmodul 63 löst dann den Umschaltvorgang der steuerbaren Umschaltvorrichtung 35 in Abhängigkeit der synchronisierten Netzfrequenz und Umrichter-Frequenz aus. Wie dargestellt kann die gesamte Logik des Phasensynchronisationsmoduls 63 in der Steuerung 21 der Personentransportanlage 1 implementiert sein. Selbstverständlich kann das Phasensynchronisationsmodul 63 auch von der Steuerung 21getrennt, realisiert werden.

Wie bereits weiter oben beschrieben und in Figur 1 dargestellt, wird das Gleichrichtermodul 37 des Frequenzumrichters 33 durch mindestens eine Phase Rund den Nullleiter N des Netzspannungsanschlusses 31 gespiesen. Mit anderen Worten wird zur Speisung des Frequenzumrichters 66 eine Frequenzumrichter-Speisespannung U_{AC} angelegt, die um den Faktor 1 / √3 beziehungsweise um den Faktor 1/ 1.73 kleiner ist als die dreiphasige Netzspannung U_{N}.

Bei einer dreiphasigen Netzspannung U_{N} von beispielsweise dreimal 400 Volt beträgt die Frequenzumrichter-Speisespannung U_{AC} somit 230Volt. Nach der Gleichrichtung ist im Gleichspannungskreis 39 eine Gleichspannung U_{DC} vorhanden, die je nach Belastung variiert. Die dreiphasige Ausgangsspannung U_{AC1}, U_{AC2}, U_{AC3} des durch den Gleichspannungskreis 39 gespiesenen Umrichtermoduls 43 kann aufgrund der vorhandenen Gleichspannung U_{DC} in einem Bereich von dreimal 0 bis 230Volt variiert werden, sofern diese annähernd sinusförmig verläuft. Bei einer dreiphasigen Netzspannung U_{N} von dreimal 380 Volt beträgt die Frequenzumrichter-Speisespannung 220Volt und dementsprechend kann die dreiphasige Ausgangsspannung U_{AC1}, U_{AC2}, U_{AC3} des Frequenzumrichters 33 jeweils in einem Bereich von 0 bis 220Volt variiert werden.

Der Frequenzumrichter 33 kann verschieden ausgestaltete Gleichrichtermodule 37 aufweisen. Das in der Figur 3A dargestellte Gleichrichtermodul 37 weist eine Dioden-Brückenschaltung 71 auf. Diese ist auf ihrer Eingangsseite 77 mit einer Phase R und mit dem Nullleiter N des dreiphasigen Netzspannungsanschlusses 31 verbunden. Die durch die Brückenschaltung 71 erzeugte Gleichspannung U_{DC} wird an den nachgeschalteten Gleichspannungskreis 39 des Frequenzumrichters 33 abgegeben und dort mittels eines Kondensators 41 geglättet.

Das in der Figur 3B dargestellte Gleichrichtermodul 37 weist eine von der Brückenschaltung 71 abweichende Diodenanordnung 73 auf und ist auf seiner Eingangsseite 77 mit jeder Phase R, S, T des dreiphasigen Netzspannungsanschlusses 31 verbunden. Die drei Phasen R, S, T werden jeweils über eine Diode gleicher Sperrrichtung derart zusammengeführt, dass aufgrund der Sperrrichtung nur die positiven Halbwellen durchgelassen werden und hierdurch der Pluspol des Gleichspannungskreises 39 des Frequenzumrichters 33 gebildet wird. Der Nullleiter N bildet hierbei den Minuspol des Gleichspannungskreises 39.

Das in der Figur 3C dargestellte Gleichrichtermodul 37 weist eine Diodenanordnung 75 auf, die nahezu identisch mit der vorangehend beschriebenen Diodenanordnung der Figur 3B ist und ebenfalls mit dem Nullleiter N und den drei Phasen R, S, T des dreiphasigen Netzspannungsanschlusses 31 verbunden ist. Die drei Phasen R, S, T werden jeweils über eine Diode gleicher Sperrrichtung derart zusammengeführt, dass aufgrund der Sperrrichtung nur die negativen Halbwellen durchgelassen werden und hierdurch der Minuspol des Gleichspannungskreises 39 des Frequenzumrichters 33 gebildet wird. Der Nullleiter N bildet hierbei den Pluspol des Gleichspannungskreises 39.

Obwohl die Figur 1 eine als Fahrtreppe ausgestaltete Personentransportanlage 1 zeigt, ist es offensichtlich, dass die vorliegende Erfindung auch in einer als Fahrsteig ausgestalteten Personentransportanlage 1 verwendet werden kann.

Abschliessend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Elektrische Steuereinrichtung (23) zur Steuerung des Antriebs einer zwischen einem Lastbetrieb und einem Leerbetrieb umschaltbaren Personentransportanlage (1), die als Fahrtreppe oder Fahrsteig ausgebildet ist und einen dreiphasigen Antriebsmotor (25) aufweist; wobei die elektrische Steuereinrichtung (23) zumindest umfasst:
• einen dreiphasigen Netzspannungsanschluss (31) für die Zuführung einer dreiphasigen Netzspannung (U_{N});
• einen mindestens hinsichtlich der Frequenz seiner dreiphasigen Ausgangsspannung (U_{AC1}, U_{AC2}, U_{AC3}) steuerbaren Frequenzumrichter (33);
• eine steuerbare Umschalteinrichtung (35) mit einem Lastbetriebsschaltzustand (B2), in welchem die drei Phasen (U₂, V₂, W₂) des Antriebsmotors (25) mit den drei Phasen (R, S, T) des Netzspannungsanschlusses (31) koppelbar sind, und einem Leerbetriebsschaltzustand (B1), in welchem die drei Phasen (U₂, V₂, W₂) des Antriebsmotors (25) mit den drei Phasen (U₁, V₁, W₁) des Frequenzumrichters (33) koppelbar sind, derart, dass der Antriebsmotor (25) im Lastbetriebsschaltzustand (B2) mit der dreiphasigen Netzspannung (U_{N}) und im Leerbetriebsschaltzustand (B1) mit der dreiphasigen Ausgangsspannung (U_{AC1}, U_{AC2}, U_{AC3}) des Frequenzumrichters (33) gespeist wird,
**dadurch gekennzeichnet, dass** die Speisung des Frequenzumrichters (33) über mindestens eine Phase (R, S, T) des dreiphasigen Netzspannungsanschlusses (31) und einen Nullleiter (N) des Netzspannungsanschlusses (31) erfolgt.

2. Elektrische Steuereinrichtung (23) nach Anspruch 1, wobei zur Speisung des Frequenzumrichters (33) eine Frequenzumrichter-Speisespannung (U_{AC}) angelegt ist, die um den Faktor 1 / √3 kleiner ist als die dreiphasige Netzspannung (U_{N}).

3. Elektrische Steuereinrichtung (23) nach Anspruch 2, wobei die dreiphasige Netzspannung (U_{N}) dreimal 400 Volt beträgt und die dreiphasige Ausgangsspannung (U_{AC1}, U_{AC2}, U_{AC3}) des Frequenzumrichters (33) einen Bereich von dreimal 0 bis 230Volt aufweist.

4. Elektrische Steuereinrichtung (23) nach Anspruch 2, wobei die dreiphasige Netzspannung (U_{N}) dreimal 380 Volt beträgt und die dreiphasige Ausgangsspannung (U_{AC1}, U_{AC2}, U_{AC3}) des Frequenzumrichters (33) einen Bereich von dreimal 0 bis 220Volt aufweist.

5. Elektrische Steuereinrichtung (23) nach einem der Ansprüche 1 bis 4, wobei der Frequenzumrichter (33) ein Gleichrichtermodul (37) mit einer Dioden- Brückenschaltung (71) aufweist, welches auf seiner Eingangsseite (77) mit einer Phase (R) des dreiphasigen Netzspannungsanschlusses (31) und mit dem Nullleiter (N) verbunden ist.

6. Elektrische Steuereinrichtung (23) nach einem der Ansprüche 1 bis 5, wobei der Frequenzumrichter (33) ein Gleichrichtermodul (37) mit einer Diodenanordnung (73) aufweist, welches Gleichrichtermodul (37) auf seiner Eingangsseite (77) mit jeder Phase (R, S, T) des dreiphasigen Netzspannungsanschlusses (31) verbunden ist, wobei die drei Phasen (R, S, T) jeweils über eine Diode gleicher Sperrrichtung zusammengeführt werden und den Pluspol eines Gleichspannungskreises (39) des Frequenzumrichters (33) bilden und der Nullleiter (N) den Minuspol des Gleichspannungskreises (39) bildet.

7. Elektrische Steuereinrichtung (23) nach einem der Ansprüche 1 bis 5, wobei der Frequenzumrichter (33) ein Gleichrichtermodul (37) mit einer Diodenanordnung (75) aufweist, welches Gleichrichtermodul (37) auf seiner Eingangsseite (77) mit jeder Phase (R, S, T) des dreiphasigen Netzspannungsanschlusses (31) verbunden ist, wobei die drei Phasen (R, S, T) jeweils über eine Diode gleicher Sperrrichtung zusammengeführt werden und den Minuspol eines Gleichspannungskreises (39) des Frequenzumrichters (33) bilden und der Nullleiter (N) den Pluspol des Gleichspannungskreises (39) bildet.

8. Elektrische Steuereinrichtung (23) nach einem der Ansprüche 1 bis 7, wobei die steuerbare Umschalteinrichtung (35) von einer Steuerung (21) der Personentransportanlage (1) ansteuerbar ist.

9. Elektrische Steuereinrichtung (23) nach einem der Ansprüche 1 bis 8, wobei diese ein Phasensynchronisationsmodul (63) aufweist, welches Phasensynchronisationsmodul (63) die Umrichter-Frequenz der dreiphasigen Ausgangsspannung (U_{AC1}, U_{AC2}, U_{AC3}) des Frequenzumrichters (33) mit der Netzfrequenz des dreiphasigen Netzspannungsanschlusses (31) synchronisiert und den Umschaltvorgang der steuerbaren Umschaltvorrichtung (35) in Abhängigkeit der synchronisierten Netzfrequenz und Umrichter-Frequenz auslöst.

10. Personentransportanlage (1), die als Fahrtreppe oder Fahrsteig ausgebildet ist, und zumindest eine Steuerung (21), einen dreiphasigen Antriebsmotor (25) und eine elektrische Steuereinrichtung (23) nach einem der Ansprüche 1 bis 9 aufweist, wobei die Steuerung (21) über eine kabelgebundene oder kabellose Signalverbindung (S₁, S₂) mit der elektrischen Steuereinrichtung (23) beziehungsweise mit deren steuerbarem Frequenzumrichter (33) und deren steuerbaren Umschalteinrichtung (35) verbunden ist.

11. Personentransportanlage (1) nach Anspruch 10, wobei diese mindestens einen Beförderungsbedarf-Signalgeber (11) aufweist, durch welchen ein Beförderungsbedarf erfassbar ist und diesen Beförderungsbedarf als Sensorsignal (S₃) an die Steuerung (21) überträgt, derart, dass abhängig vom Sensorsignal (S₃) die Steuerung (21) den steuerbaren Frequenzumrichter (33) und die steuerbare Umschalteinrichtung (35) ansteuert.

12. Verfahren zur Steuerung des Antriebs einer Personentransportanlage (1) nach einem der Ansprüche 10 oder 11, wobei die Steuerung (21) die steuerbare Umschalteinrichtung (35) derart ansteuert, dass dem dreiphasigen Antriebsmotor (25) des Antriebs bei einem Lastbetrieb die dreiphasige Netzspannung (U_{N}) von dreimal 400 Volt zugeführt wird und bei einem Leerbetrieb die dreiphasige Ausgangsspannung (U_{AC1}, U_{AC2}, U_{AC3}) des Frequenzumrichters (33) von dreimal 0 bis 230Volt zugeführt wird.

13. Verfahren zur Steuerung des Antriebs einer Personentransportanlage (1) nach einem der Ansprüche 10 oder 11, wobei die Steuerung (21) die steuerbare Umschalteinrichtung (35) derart ansteuert, dass dem dreiphasigen Antriebsmotor (25) des Antriebs bei einem Lastbetrieb die dreiphasige Netzspannung (U_{N}) von dreimal 380 Volt zugeführt wird und bei einem Leerbetrieb die dreiphasige Ausgangsspannung (U_{AC1}, U_{AC2}, U_{AC3}) des Frequenzumrichters (33) von dreimal 0 bis 220Volt zugeführt wird.

14. Verfahren nach Anspruch 12 oder 13, wobei die Personentransportanlage (1) mindestens einen Beförderungsbedarf-Signalgeber (11) aufweist, durch welchen ein Beförderungsbedarf und damit ein bevorstehender Lastbetrieb erfasst werden kann und welcher BeförderungsbedarfSignalgeber (11) einen erfassten Beförderungsbedarf als Sensorsignal (S₃) an die Steuerung (21) überträgt, wobei die Steuerung (21) abhängig von diesem Sensorsignal (S₃) den steuerbaren Frequenzumrichter (33) und die steuerbare Umschalteinrichtung (35) ansteuert.

## Claims

1. Electrical control device (23) for controlling the drive of a passenger transport system (1) which can be switched between load operation and idle operation, which passenger transport system (1) is designed as an escalator or moving walkway and has a three-phase drive motor (25); the electrical control device (23) at least comprising:
• a three-phase mains voltage connection (31) for supplying a three-phase mains voltage (U_{N});
• a frequency converter (33) which can be controlled at least with regard to the frequency of its three-phase output voltage (U_{AC1}, U_{AC2}, U_{AC3});
• a controllable switching device (35) having a load operation switching state (B2), in which the three phases (U₂, V₂, W₂) of the drive motor (25) can be coupled to the three phases (R, S, T) of the mains voltage connection (31), and an idle operation switching state (B 1), in which the three phases (U₂, V₂, W₂) of the drive motor (25) can be coupled to the three phases (U₁, V₁, W₁) of the frequency converter (33) in such a way that the drive motor (25) is supplied with the three-phase mains voltage (U_{N}) in the load operation switching state (B2) and with the three-phase output voltage (U_{AC1}, U_{AC2}, U_{AC3}) of the frequency converter (33) in the idle operation switching state (B 1),
**characterized in that** the frequency converter (33) is supplied via at least one phase (R, S, T) of the three-phase mains voltage connection (31) and a neutral conductor (N) of the mains voltage connection (31).

2. Electrical control device (23) according to claim 1, wherein a frequency converter supply voltage (U_{AC}) is applied to supply the frequency converter (33), which frequency converter supply voltage (U_{AC}) is smaller than the three-phase mains voltage (U_{N}) by a factor of 1/√3.

3. Electrical control device (23) according to claim 2, wherein the three-phase mains voltage (U_{N}) is three times 400 volts and the three-phase output voltage (U_{AC1}, U_{AC2}, U_{AC3}) of the frequency converter (33) has a range from three times 0 to 230 volts.

4. Electrical control device (23) according to claim 2, wherein the three-phase mains voltage (U_{N}) is three times 380 volts and the three-phase output voltage (U_{AC1}, U_{AC2}, U_{AC3}) of the frequency converter (33) has a range from three times 0 to 220 volts.

5. Electrical control device (23) according to any of claims 1 to 4, wherein the frequency converter (33) has a rectifier module (37) having a diode bridge circuit (71) which is connected, on its input side (77), to a phase (R) of the three-phase mains voltage connection (31) and to the neutral conductor (N).

6. Electrical control device (23) according to any of claims 1 to 5, wherein the frequency converter (33) has a rectifier module (37) having a diode arrangement (73), which rectifier module (37) is connected, on its input side (77), to each phase (R, S, T) of the three-phase mains voltage connection (31), wherein the three phases (R, S, T) are combined via a diode in the same reverse direction and form the positive pole of a DC voltage circuit (39) of the frequency converter (33) and the neutral conductor (N) forms the negative pole of the DC voltage circuit (39).

7. Electrical control device (23) according to any of claims 1 to 5, wherein the frequency converter (33) has a rectifier module (37) having a diode arrangement (75), which rectifier module (37) is connected, on its input side (77), to each phase (R, S, T) of the three-phase mains voltage connection (31), wherein the three phases (R, S, T) are combined via a diode in the same reverse direction and form the negative pole of a DC voltage circuit (39) of the frequency converter (33) and the neutral conductor (N) forms the positive pole of the DC voltage circuit (39).

8. Electrical control device (23) according to any of claims 1 to 7, wherein the controllable switching device (35) can be controlled by a controller (21) of the passenger transport system (1).

9. Electrical control device (23) according to any of claims 1 to 8, wherein said device has a phase synchronization module (63), which phase synchronization module (63) synchronizes the converter frequency of the three-phase output voltage (U_{AC1}, U_{AC2}, U_{AC3}) of the frequency converter (33) with the mains frequency of the three-phase mains voltage connection (31) and triggers the switching process of the controllable switching device (35) depending on the synchronized mains frequency and converter frequency.

10. Passenger transport system (1), which is designed as an escalator or moving walkway, and which comprises at least a controller (21), a three-phase drive motor (25), and an electrical control device (23) according to any of claims 1 to 9, wherein the controller (21) is connected via a wired or wireless signal connection (S₁, S₂) to the electrical control device (23) or to its controllable frequency converter (33) and its controllable switching device (35).

11. Passenger transport system (1) according to claim 10, wherein said system has at least one transport requirement signal transmitter (11) by means of which a transport requirement can be detected and this transport requirement is transmitted to the controller (21) as a sensor signal (S₃) in such a way that, depending on the sensor signal (S₃), the controller (21) controls the controllable frequency converter (33) and the controllable switching device (35).

12. Method for controlling the drive of a passenger transport system (1) according to either claim 10 or claim 11, wherein the controller (21) controls the controllable switching device (35) in such a way that the three-phase drive motor (25) of the drive is supplied with the three-phase mains voltage (U_{N}) of three times 400 volts during load operation and is supplied with the three-phase output voltage (U_{AC1}, U_{AC2}, U_{AC3}) of the frequency converter (33) of three times 0 to 230 volts during idle operation.

13. Method for controlling the drive of a passenger transport system (1) according to either claim 10 or claim 11, wherein the controller (21) controls the controllable switching device (35) in such a way that the three-phase drive motor (25) of the drive is supplied with the three-phase mains voltage (U_{N}) of three times 380 volts during load operation and is supplied with the three-phase output voltage (U_{AC1}, U_{AC2}, U_{AC3}) of the frequency converter (33) of three times 0 to 220 volts during idle operation.

14. Method according to either claim 12 or claim 13, wherein the passenger transport system (1) has at least one transport requirement signal transmitter (11) by means of which a transport requirement and thus an imminent load operation can be detected and which transport requirement signal transmitter (11) transmits a detected transport requirement to the controller (21) as a sensor signal (S₃), wherein, depending on this sensor signal (S₃), the controller (21) controls the controllable frequency converter (33) and the controllable switching device (35).

## Revendications

1. Dispositif de commande (23) électrique permettant de commander l'entraînement d'une installation de transport de personnes (1) pouvant être commutée entre un fonctionnement en charge et un fonctionnement à vide, laquelle est conçue comme un escalier roulant ou un trottoir roulant et présente un moteur d'entraînement (25) triphasé ; dans lequel le dispositif de commande (23) électrique comprend au moins :
• un moyen de raccordement à la tension de réseau triphasée (31) pour l'acheminement d'une tension de réseau triphasée (U_{N}) ;
• un convertisseur de fréquence (33) pouvant être commandé au moins en ce qui concerne la fréquence de sa tension de sortie triphasée (U_{AC1}, U_{AC2}, U_{AC3}) ;
• un dispositif de commutation (35) pouvant être commandé comportant un état de commutation de fonctionnement en charge (B2), dans lequel les trois phases (U₂, V₂, W₂) du moteur d'entraînement (25) peuvent être couplées aux trois phases (R, S, T) du moyen de raccordement à la tension de réseau (31), et un état de commutation de fonctionnement à vide (B1), dans lequel les trois phases (U₂, V₂, W₂) du moteur d'entraînement (25) peuvent être couplées aux trois phases (U₁, V₁, W₁) du convertisseur de fréquence (33), de telle sorte que le moteur d'entraînement (25) est alimenté, dans l'état de commutation de fonctionnement en charge (B2), par la tension de réseau triphasée (U_{N}) et, dans l'état de commutation de fonctionnement à vide (B1), par la tension de sortie triphasée (U_{AC1}, U_{AC2}, U_{AC3}) du commutateur de fréquence (33),
**caractérisé en ce que** l'alimentation du convertisseur de fréquence (33) est effectuée par l'intermédiaire d'au moins une phase (R, S, T) du moyen de raccordement à la tension de réseau triphasée (31) et d'un conducteur neutre (N) du moyen de raccordement à la tension de réseau (31).

2. Dispositif de commande (23) électrique selon la revendication 1, dans lequel, pour l'alimentation du convertisseur de fréquence (33), une tension d'alimentation du convertisseur de fréquence (U_{AC}) est appliquée, laquelle est inférieure d'un facteur 1 / √3 à la tension de réseau triphasée (U_{N}).

3. Dispositif de commande (23) électrique selon la revendication 2, dans lequel la tension de réseau triphasée (U_{N}) est de trois fois 400 volts et la tension de sortie triphasée (U_{AC1}, U_{AC2}, U_{AC3}) du commutateur de fréquence (33) présente une plage allant de trois fois 0 à 230 volts.

4. Dispositif de commande (23) électrique selon la revendication 2, dans lequel la tension de réseau triphasée (U_{N}) est de trois fois 380 volts et la tension de sortie triphasée (U_{AC1}, U_{AC2}, U_{AC3}) du commutateur de fréquence (33) présente une plage allant de trois fois 0 à 220 volts.

5. Dispositif de commande (23) électrique selon l'une des revendications 1 à 4, dans lequel le commutateur de fréquence (33) présente un module redresseur (37) comportant un circuit en pont de diodes (71) qui est connecté sur son côté entrée (77) à une phase (R) du moyen de raccordement à la tension de réseau triphasée (31) et au conducteur neutre (N).

6. Dispositif de commande (23) électrique selon l'une des revendications 1 à 5, dans lequel le commutateur de fréquence (33) présente un module redresseur (37) comportant un agencement de diodes (73), lequel module redresseur (37) est connecté sur son côté entrée (77) à chaque phase (R, S, T) du moyen de raccordement à la tension de réseau triphasée (31), dans lequel les trois phases (R, S, T) sont respectivement réunies par l'intermédiaire d'une diode de même sens de blocage et forment le pôle positif d'un circuit de tension continue (39) du convertisseur de fréquence (33) et le conducteur neutre (N) forme le pôle négatif du circuit de tension continue (39).

7. Dispositif de commande (23) électrique selon l'une des revendications 1 à 5, dans lequel le commutateur de fréquence (33) présente un module redresseur (37) comportant un agencement de diodes (75), lequel module redresseur (37) est connecté sur son côté entrée (77) à chaque phase (R, S, T) du moyen de raccordement à la tension de réseau triphasée (31), dans lequel les trois phases (R, S, T) sont respectivement réunies par l'intermédiaire d'une diode de même sens de blocage et forment le pôle négatif d'un circuit de tension continue (39) du convertisseur de fréquence (33) et le conducteur neutre (N) forme le pôle positif du circuit de tension continue (39).

8. Dispositif de commande (23) électrique selon l'une des revendications 1 à 7, dans lequel le dispositif de commutation (35) pouvant être commandé peut être commandé par une commande (21) de l'installation de transport de personnes (1).

9. Dispositif de commande (23) électrique selon l'une des revendications 1 à 8, dans lequel celui-ci présente un module de synchronisation de phases (63), lequel module de synchronisation de phases (63) synchronise la fréquence de convertisseur de la tension de sortie triphasée (U_{AC1}, U_{AC2}, U_{AC3}) du convertisseur de fréquence (33) avec la fréquence de réseau du moyen de raccordement à la tension de réseau triphasée (31) et déclenche le processus de commutation du dispositif de commutation (35) pouvant être commandé en fonction de la fréquence de réseau et de la fréquence de convertisseur synchronisées.

10. Installation de transport de personnes (1), laquelle est conçue comme un escalier roulant ou un trottoir roulant, et présente au moins une commande (21), un moteur d'entraînement (25) triphasé et un dispositif de commande (23) électrique selon l'une des revendications 1 à 9, dans laquelle la commande (21) est connectée au dispositif de commande (23) électrique ou à son convertisseur de fréquence (33) pouvant être commandé et à son dispositif de commutation (35) pouvant être commandé par l'intermédiaire d'une connexion par signaux (S₁, S₂) par câble ou sans câble.

11. Installation de transport de personnes (1) selon la revendication 10, dans laquelle celle-ci présente au moins un transmetteur de signaux de besoin de transport (11), au moyen duquel un besoin de transport peut être détecté et lequel transmet ledit besoin de transport en tant que signal de capteur (S₃) à la commande (21), de telle sorte que, en fonction du signal de capteur (S₃), la commande (21) commande le convertisseur de fréquence (33) pouvant être commandé et le dispositif de commutation (35) pouvant être commandé.

12. Procédé permettant la commande de l'entraînement d'une installation de transport de personnes (1) selon l'une des revendications 10 ou 11, dans lequel la commande (21) commande le dispositif de commutation (35) pouvant être commandé de telle sorte que la tension de réseau triphasée (U_{N}) de trois fois 400 volts est acheminée au moteur d'entraînement (25) triphasé de l'entraînement lors d'un fonctionnement en charge et que la tension de sortie triphasée (U_{AC1}, U_{AC2}, U_{AC3}) du convertisseur de fréquence (33) de trois fois 0 à 230 volts est acheminée lors d'un fonctionnement à vide.

13. Procédé permettant la commande de l'entraînement d'une installation de transport de personnes (1) selon l'une des revendications 10 ou 11, dans lequel la commande (21) commande le dispositif de commutation (35) pouvant être commandé de telle sorte que la tension de réseau triphasée (U_{N}) de trois fois 380 volts est acheminée au moteur d'entraînement (25) triphasé de l'entraînement lors d'un fonctionnement en charge et que la tension de sortie triphasée (U_{AC1}, U_{AC2}, U_{AC3}) du convertisseur de fréquence (33) de trois fois 0 à 220 volts est acheminée lors d'un fonctionnement à vide.

14. Procédé selon la revendication 12 ou 13, dans lequel l'installation de transport de personnes (1) présente au moins un transmetteur de signaux de besoin de transport (11), au moyen duquel un besoin de transport et donc un fonctionnement en charge imminent peuvent être détectés et lequel transmetteur de signaux de besoin de transport (11) transmet un besoin de transport détecté en tant que signal de capteur (S₃) à la commande (21), dans lequel la commande (21) commande le convertisseur de fréquence (33) pouvant être commandé et le dispositif de commutation (35) pouvant être commandé en fonction dudit signal de capteur (S₃).
